# FASCICULE DE BREVET EUROPEEN

(11) **EP 1 543 173 B1**
(45) Date de publication et mention de la délivrance du brevet: **28.12.2005**
(21) Numéro de dépôt: 03773800.2
(22) Date de dépôt: 22.09.2003
(51) Int. Cl.: C22C 21/00, H01G 9/045, H01G 9/055, C22F 1/02, C22F 1/04

(54) **FEUILLE OU BANDE EN ALUMINIUM RAFFINE POUR CONDENSATEURS ELECTROLYTIQUE**
ALUMINIUMFOLIE MIT HOHER REINHEIT FÜR ELEKTROLYTISCHE KONDENSATOREN
REFINED ALUMINIUM STRIP OR SHEET FOR ELECTROLYTIC CAPACITORS

(30) Priorité: 24.09.2002 FR 0211774
(43) Date de publication de la demande: 22.06.2005
(73) Titulaire: PECHINEY RHENALU, 75116 Paris (FR)
(72) Inventeur: BOEHM, Matthieu, F-38500 Voiron (FR); BUTRUILLE, Jean-Rémi, F-38330 Montbonnot Saint Martin (FR)
(74) Mandataire: Marsolais, Richard
(86) Numéro de dépôt international: PCT/FR2003/002778
(87) Numéro de publication internationale: WO 2004/029311

(56) Documents cités:
- EP-A- 0 490 574
- FR-A- 2 790 008
- DATABASE CAPLUS STN; ISOYAMA, EIZO ET AL: "Aluminium foil containing carbon for electrolytic capacitor" XP0002242041 cité dans la demande -& JP 04 062820 A (SHOWA ALUM CORP) 27 février 1992 (1992-02-27)

## Description

### Domaine de l'invention

L'invention concerne les feuilles ou bandes minces en aluminium raffiné de pureté supérieure à 99.9%, qui, après avoir subi un traitement de surface de piqûration (« etching ») destiné à augmenter leur surface spécifique, sont utilisées à la fabrication d'anodes de condensateurs électrolytiques, notamment de condensateurs haute tension.

### Etat de la technique

L'effet de la surface de l'aluminium raffiné sur son aptitude à l'etching a été étudié par de nombreux auteurs qui ont mis en évidence l'influence de deux paramètres principaux :
- la couche d'oxyde superficielle
- les impuretés et dopants ségrégés en surface.

En ce qui concerne la couche d'oxyde superficielle, Osawa et Fukuoaka ont récemment fait la synthèse des connaissances dans ce domaine (Hyomen Gijutsu (2000) 51(11) 1117-1120). Des études ont montré que les piqûres peuvent être initiées autour de cristallites présentes dans la couche d'oxyde, deux types ayant été identifiés : γ-Al₂O₃ et MgAl₂O₄ (spinelle). Les piqûres sont initiées dans des fissures qui sont associées avec la cristallisation du film d'oxyde.

Plusieurs demandes de brevets mentionnent également l'importance de la cristallisation de la couche d'oxyde, notamment JP 08222487 et JP 08-222488 (Mitsubishi Aluminium), JP 2000-216063 et JP2000-216064 (Nippon Foil Mfg), dans lesquels l'effet de la quantité de γ-Al₂O₃ est revendiquée.

La demande de brevet JP 10-189397 (Sumitomo Light Metal Industries) mentionne l'importance de MgAl₂O₄ (spinelle), présentée comme facteur favorable pour l'initiation des piqûres.

Plusieurs brevets mentionnent l'effet bénéfique d'une hydratation importante de la couche d'oxyde, un traitement d'immersion dans l'eau bouillante en présence de divers additifs permettant d'obtenir une augmentation de l'aptitude à l'etching des feuilles, par exemple JP 08-306592 (Kobe Steel), JP 2000-232038 (Kobe Steel), JP 05-006840), (Nippon Seihaku), JP 07-150279 (Nippon Seihaku), JP 07-297089 (Nippon Seihaku), US 5417839 (Showa Aluminum) et JP 06-104147 (Sumitomo Light Metal Industries).

En ce qui concerne les impuretés et dopants ségrégés en surface, il est connu que de nombreuses impuretés présentes dans le métal lors de la coulée, ajoutées volontairement ou provenant des minerais utilisés, et se ségrégeant en surface lors des différentes étapes de transformation, en particulier au laminage à chaud et au traitement thermique final, ont un rôle sur l'aptitude des feuilles à l'etching.

Les principales impuretés connues pour affecter l'etching sont citées par Osawa et Fukuoka. Le bismuth ségrège à.l'interface oxyde-aluminium et peut avoir un effet néfaste de même que le bore. Le magnésium ségrège à la surface de la couche d'oxyde. Le plomb et l'indium sont connus pour ségréger jusqu'à la profondeur de 50 nm et pour avoir un effet favorable sur l'etching. Fukuoka a décrit les profils de ségrégation en surface du bore, du magnésium, du fer et du bismuth (Journal. of Japan Institute of Light Metals, 51 (7) 2001, pp 370-377).

Plusieurs brevets revendiquent le profil en profondeur d'impuretés telles que le plomb, le bismuth et l'indium, notamment JP 57-194516 (Toyo Aluminium), US5128836 (Sumitomo Light Metal) et la demande EP 1031638 au nom de la demanderesse.

Le brevet EP0490574 de Showa Aluminium décrit l'effet favorable d'un enrichissement de surface de 16 éléments, soit en surface de la couche d'oxyde, soit à l'interface entre la couche d'oxyde et le métal, soit en surface de la couche d'oxyde et à l'interface. Le rapport de concentration mesuré à la sonde ionique est compris entre 1,2 et 30.

La demande de brevet JP 04-062820 (Showa Aluminium) décrit des feuilles contenant de 1 à 50 ppm de carbone, et présentant un enrichissement en carbone dans la couche de surface d'épaisseur 0,1 µm de 5 à 300 fois la concentration à coeur. Le carbone en surface provient de la ségrégation en surface du carbone à coeur.

L'invention a pour but de fournir des feuilles et bandes d'aluminium raffiné présentant une meilleure aptitude à l'etching que celles de l'art antérieur, et permettant d'améliorer encore les performances des condensateurs électrolytiques fabriqués à partir de ces feuilles et bandes.

### Objet de l'invention

L'invention a pour objet une feuille ou bande mince en aluminium raffiné de pureté supérieure à 99,9%, destinée à la fabrication d'anodes de condensateurs électrolytiques, comportant dans la zone superficielle de profondeur 10 nm du carbure d'aluminium à une teneur atomique comprise entre 5 et 25%, et de préférence entre 10 et 20%.

### Description de l'invention

L'invention repose sur la découverte, au cours d'essais réalisés par la demanderesse, de feuilles d'aluminium raffiné présentant des aptitudes exceptionnelles à l'etching, et conduisant à une amélioration sensible de la capacité des condensateurs réalisés à partir de ces feuilles. De nombreuses caractérisations de ces feuilles ont été réalisées pour comprendre l'origine de cette performance exceptionnelle, et ont mis en évidence qu'elles contenaient une quantité inhabituelle de carbure d'aluminium, situé à l'interface entre le métal et l'oxyde.

Deux méthodes analytiques ont permis de mettre en évidence le carbure d'aluminium formé, l'ESCA (Electron Spectroscopy for Chemical Analysis), également appelé XPS (X-Ray Photoelectron Spectroscopy), et la microscopie électronique à transmission ou TEM (Transmission Electron Microscopy).

L'utilisation de l'XPS a montré la formation de carbure après recuit (Al₄C₃ ≈ 282 eV en prenant comme référence la position 72,8 eV pour le pic d'aluminium métal). Les espèces carbures des métaux sont observés sur le pic de carbone C 1s à des énergies comprises entre 283 et 281 eV, comme indiqué dans la base de données XPS du NIST (National Institute of Standards and Technology), ou dans le manuel de C.D. WAGNER, W.M. RIGGS, L.E. DAVIS, J.F. MOULDER, « Handbook of X-ray Photoelectron Spectroscopy », Perkin-Elmer Corporation, Physical Electronics Division.

Plus précisément pour les carbures d'aluminium, l'article de C. Hinnen, D. Imbert, J.M. Siffre, P. Marcus : « An in situ XPS Study of Sputter-deposited Aluminium Thin Films on Graphite », Applied Surface Science, 78, (1994), 219-231, mentionne pour Al₄C₃ un pic 282,4 eV. L'article de B. Maruyama, F.S. Ohuchi, L. Rabenberg : « Catalytic Carbide Formation at Aluminium-Carbon Interface », Journal of Materials Science Letters, 9, (1990), pp. 864-866 indique pour Al₄C₃ un pic 281,5 eV, et pour l'oxycarbure un pic 282,5 eV.

Les analyses XPS angulaires dans l'article de P. J. Cumpson : « Angle -resolved XPS and AES Depth-Resolution and a General Comparison of Properties of Depth-Profile Reconstruction Methods », Journal of Electron Spectroscopy and Related Phenomena, 73 (1995), pp. 25-52, montrent que les carbures, contrairement au carbone superficiel dû à la contamination de l'échantillon par l'atmosphère, sont localisés sous la couche d'oxyde. Les carbures présentent un profil angulaire comparable à celui de l'aluminium métal qui, par définition, est localisé sous la couche d'oxyde.

La méthode XPS permet d'obtenir une analyse quantitative de la surface des matériaux. Cette méthode est maintenant largement reconnue, et les résultats sont exprimés en % atomique. Le % atomique de carbure étant influencé par l'importance des couches superficielles (carbone de contamination, épaisseur de la couche d'oxyde), une méthode a été définie pour obtenir une quantification indépendante de ces paramètres.

Les carbures et le métal étant tous deux situés sous la couche d'oxyde et donc influencés de façon identique par les couches superficielles, la méthode proposée est d'établir le rapport des % atomiques de carbure d'aluminium et d'aluminium sous forme métal. On utilise donc le % de carbure d'aluminium dans l'aluminium métal qui est calculé de la façon suivante :
% carbure dans Al métal = % atomique de carbure / (% atomique de carbure + % atomique d'Al métal) *100. Les pourcentages d'aluminium métal et de carbure sont déterminées par des mesures XPS : l'angle d'analyse est de 45° entre l'analyseur et la surface, la source est la raie Al Kα mono-chromatisée (1486,8 eV).

Des examens TEM réalisés après dissolution sélective de l'aluminium confirment la présence de carbure sous la couche d'oxyde par leur cristallographie (Al₄C₃).

Les examens TEM mettent en évidence de façon indiscutable, mais plus difficilement quantifiable, la présence de carbure d'aluminium pour les feuilles et bandes l'invention. L'effet favorable du carbure d'aluminium a été observé pour des concentrations atomiques dans l'aluminium comprises entre 5 et 25%, et son origine a été recherchée.

Comme le carbone est très peu soluble dans l'aluminium solide (moins de 0,1 ppm) et que le carbure formé est très stable, ceci implique que le carbone contenu dans la masse de l'aluminium est bloqué sous forme de carbure, et ne peut pas migrer vers la surface, comme le suggèrent les publications suivantes :
L. Svendsen and A. Jarfors : « Al-Ti-C Phase Diagram », Materials Science and Technology, 1993 Vol.9,
R.C. Dorward : Discussion of « Comments on the Solubility of Carbon in Molten Aluminium », Metallurgical Transactions A, 1990, Vol. 21A,
C. Qiu, R. Metselaar : « Solubility of Carbon in liquid Al and Stability of Al₄C₃ « , Journal of Alloys and Compounds, 1994, 216, 55-60.

Il est donc impossible que les carbures présents en surface proviennent d'une ségrégation de carbone interne. Il s'agit au contraire d'un carbone venu de l'extérieur, qui a réagi avec l'aluminium en surface à température élevée.

La fabrication des feuilles et bandes selon l'invention se fait de manière connue jusqu'à l'étape de recuit final. Elle comporte l'élaboration d'aluminium raffiné de pureté au moins égale à 99, 9%. Le procédé de raffinage utilisé peut être, soit un raffinage électrolytique dit " 3 couches ", tel que décrit dans les brevets FR 759588 et FR 832528, soit un procédé par ségrégation tel que décrit dans le brevet FR 1594154. Le métal est coulé sous forme de plaques, homogénéisé, ensuite laminé à chaud, puis à froid jusqu'à l'épaisseur finale, qui est de l'ordre de 0,1 mm. La gamme de fabrication comporte généralement un recuit intermédiaire entre le laminage à chaud et le laminage à froid, et un autre entre deux passes de laminage à froid. Enfin la feuille ou la bande est soumise à un recuit final sous gaz neutre, par exemple l'argon, à une température comprise entre 500 et 580°C.

Pour obtenir les feuilles et bandes selon l'invention, on introduit dans le gaz neutre un gaz contenant des atomes de carbone susceptibles de former à la température du recuit final du carbure d'aluminium. On peut utiliser par exemple du méthane CH₄ ou d'autres dérivés gazeux du carbone tels que le propane, le butane, l'isobutane, l'éthylène, l'acétylène, le propène, le propyne, le butadiène, etc..

La présence de cristallites d'oxydes est bien connue pour être favorable à l'etching, et les inventeurs émettent l'hypothèse que l'incorporation de carbure sous la couche d'oxyde a un effet similaire, et permet d'augmenter la densité de cristallites en surface, et donc la densité des tunnels, améliorant ainsi la capacité du condensateur.

### Exemple

On a préparé 12 échantillons de feuille d'aluminium raffiné de pureté 99,99% selon la gamme de transformation est la suivante :
- coulée d'une plaque et homogénéisation de cette plaque 30 h à 600°C,
- laminage à chaud et à froid jusqu'à l'épaisseur 0,125 mm
- recuit intermédiaire de 3 0 h à 200°C,
- laminage à froid jusqu'à l'épaisseur 0,1 mm,
- recuit final sous argon dans les conditions décrites au tableau 1, en ajoutant, pour

les échantillons selon l'invention, 5 ou 10% de méthane dans l'argon. On a mesuré ensuite la capacité des condensateurs réalisés à partir des échantillons piqûrés selon le procédé suivant: les feuilles d'aluminium sont électrolysées dans une solution contenant 5% de HCl et 15% de H₂SO₄ avec une densité de courant continu de 200 mA/cm² pendant 60 s à 85°C. Les feuilles sont ensuite électrolysées dans une solution à 5% HCl, avec une densité de courant continu de 50 mA/cm² pendant 8 mn à 80°C. La formation de l'oxyde est réalisée à une tension de 450 V dans une solution de borate d'ammonium. La capacité est mesurée en µF/cm², mais ramenée ensuite en pourcentage par rapport à une feuille raffinée de référence. Les résultats obtenus sont rassemblés au tableau 1.

**Tableau 1**

| Echantillon | % CH₄ dans Ar | Température de recuit | Durée de recuit (h) | % carbure en surface | Capacité (%) |
|---|---|---|---|---|---|
| 1 | 5 | 545°C | 15 | 7 | 97 |
| 2 | 5 | 545°C | 10 | 3 | 101 |
| 3 | 5 | 570°C | 15 | 12 | 112 |
| 4 | 5 | 570°C | 10 | 8 | 105 |
| 5 | 10 | 545°C | 15 | 15 | 108 |
| 6 | 10 | 545°C | 10 | 12 | 111 |
| 7 | 10 | 570°C | 15 | 23 | 107 |
| 8 | 10 | 570°C | 10 | 18 | 106 |
| 9 | 0 | 520°C | 20 | 0 | 95 |
| 10 | 0 | 545°C | 15 | 0 | 98 |
| 11 | 0 | 570°C | 10 | 0 | 97 |
| 12 | 0 | 595°C | 5 | 0 | 99 |

On constate une amélioration de la capacité pour 7 des échantillons 1 à 8 pour lesquels le recuit final a été effectué en ajoutant du méthane à l'argon, et plus spécialement pour les 4 échantillons 5 à 8, pour lesquels l'addition de méthane était supérieure, la moyenne étant de 108% au lieu de 104% pour les échantillons 1 à 4, et 97% pour les échantillons 9 à 12 selon l'art antérieur.

## Revendications

1. Feuille ou bande mince en aluminium raffiné de pureté supérieure à 99,9%, destinée à la fabrication d'anodes de condensateurs électrolytiques, comportant dans la zone superficielle de profondeur 10 nm du carbure d'aluminium à une teneur atomique comprise entre 5 et 25%.

2. Feuille ou bande selon la revendication 1, **caractérisée en ce que** la teneur atomique en carbure d'aluminium de la zone superficielle est comprise entre 10 et 20%.

3. Procédé de fabrication de feuilles et bandes selon l'une des revendications 1 ou 2, comportant la coulée d'une plaque d'aluminium raffiné, son homogénéisation, un laminage à chaud, un laminage à froid et un recuit final sous atmosphère neutre, **caractérisé en ce qu'**on mélange au gaz neutre un gaz contenant des atomes de carbone.

4. Procédé selon la revendication 3, **caractérisé en ce que** le gaz contenant des atomes de carbone appartient au groupe constitué par le méthane, le propane, le butane, l'isobutane, l'éthylène, l'acétylène, le propène, le propyne et le butadiène.

## Patentansprüche

1. Folie oder Dünnband aus Reinstaluminium mit einem Reinheitsgrad von über 99,9 % zur Herstellung von Anoden für elektrolytische Kondensatoren, welche Folie oder Band in der 10 nm tiefen Oberflächenzone Aluminiumkarbid mit einem Atomgehalt von 5 bis 25 % enthält.

2. Folie oder Band nach Anspruch 1, **dadurch gekennzeichnet, dass** der Atomgehalt an Aluminiumkarbid der Oberflächenzone 10 bis 20 % beträgt.

3. Verfahren zur Herstellung von Folien und Bändern nach einem der Ansprüche 1 oder 2, umfassend das Gießen einer Platte aus Reinstaluminium, ihre Homogenisierung, ein Warmwalzen, ein Kaltwalzen und ein Endglühen unter neutraler Atmosphäre, **dadurch gekennzeichnet, dass** dem Neutralgas ein Kohlenstoffatome enthaltendes Gas beigemischt wird.

4. Verfahren nach Anspruch 3, **dadurch gekennzeichnet, dass** das Kohlenstoffatome enthaltende Gas zur Gruppe bestehend aus Methan, Propan, Butan, Isobutan, Ethylen, Acetylen, Propen, Propin und Butadien gehört.

## Claims

1. Thin sheet or strip of refined aluminium more than 99.9% pure, intended for the manufacture of anodes of electrolytic capacitors, comprising aluminium carbide with an atomic content of between 5 and 25% in the 10 nm deep surface area.

2. Sheet or strip according to claim 1, **characterised in that** the atomic content of aluminium carbide in the surface area is between 10 and 20%.

3. Process for manufacturing sheets and strips according to either of claims 1 or 2, comprising casting of a refined aluminium plate, homogenisation of the plate, hot rolling, cold rolling and final annealing under a neutral atmosphere, **characterised in that** a gas containing carbon atoms is mixed with the neutral gas.

4. Process according to claim 3, **characterised in that** the gas containing carbon atoms belongs to the group composed of methane, propane, butane, isobutane, ethylene, acetylene, propene, propyne and butadiene.
